# EUROPEAN PATENT APPLICATION

(11) **EP 2 824 436 A1**
(43) Date of publication of application: **14.01.2015**
(21) Application number: 13757362.2
(22) Date of filing: 07.02.2013
(51) Int. Cl.: G01K 11/06, A23B 4/06

(54) **DEVICE FOR CONTROLLING THE FREEZING OF FOOD PRODUCTS**

(30) Priority: 06.03.2012 ES 201230242
(71) Applicant: Galián Peinado, Consolación, 23007 Jaén (ES); Mata Albendea, Miguel Juan, 3007 Jaén (ES)
(72) Inventor: MATA ALBENDEA, Miguel Juan, E-23007 Jaén (ES)
(74) Representative: Munoz Garcia, Antonio
(86) International application number: PCT/ES2013/070070
(87) International publication number: WO 2013/132121

(57) **Abstract**

The present invention relates to a device specially designed for use in cold chains to indicate any break in said chain, i.e., any thawing and refreezing of the product under control. The invention comprises a small, closed, transparent container, having therein a weak dividing partition determining two independent compartments, one of which is filled with water while the other is filled with a colored liquid with a freezing point considerably lower than that of water, such as a dyed alcohol, for example, such that when the device freezes the expansion causes the partition to break such that thawing occurs, and the liquids will mix together, indicating said thawing.

## Description

### Object of the Invention

The present invention relates to a control device which is specially designed for use in cold chains, indicating any break in said chain, i.e., any thawing and refreezing of the product under control.

The device at hand is therefore capable of indicating that the food product associated with said device has thawed and refrozen at least once in the chain from the producer to the consumer of said product.

### Background of the Invention

As is known, the organoleptic properties of products that are kept in cold stores under controlled temperature both at the industrial level and at the consumer level, i.e., frozen food products, remain intact if such frozen state is maintained up until the time of consumption. To that end, the cold chain must be maintained throughout the entire distribution, i.e., at the point of origin, during transport to wholesalers, during storage in the wholesaler's warehouse, during subsequent distribution *per se,* etc.

If this chain permanently maintains the envisaged freezing temperature, -18°C for example, there will be no problem for the product; however, if the cold chain is broken at any point thereof, the product thaws and freezes again, causing protein denaturation, as the ice crystals formed from water existing in the product increase in size, extracting water bound to the proteins, such that said proteins are disrupted, being incapable of recovering water during the second thawing, which water entrains water-soluble nutrients as it is drawn out. This entails a change in food texture, causing hardening and even reducing solubility and nutritional value.

This problem is further intensified in the specific case of pharmaceutical products, where the detection of thawing is much more difficult because such medicinal products are dissolved in salts that will not thaw, but the active ingredients stored therein will no longer act suitably. In this case, ice does not even formed in the package, as occurs in food products.

To avoid this problem, the use of small pieces of ice introduced in a small bag, which is in turn introduced in a bag containing the product at hand is known, such that when thawing occurs during the cold chain, said small piece of ice melts, i.e., loses its configuration, and upon freezing again, the product only shows a uniform mass of ice indicating that the product has thawed at least once and has frozen again.

The fundamental problem of this solution is the need to handle a frozen element to introduce it in the corresponding small bag and to subsequently introduce it in the bag containing the food product, which involves significant complexity both from the viewpoint of said handling and of process speed to prevent the indicator, i.e., said small piece of ice, from thawing before the product with which it must be associated freezes.

### Description of the Invention

The control device proposed by the invention solves in a fully satisfactory manner the problems described above, offering the same degree of certainty in terms of control, but allowing handling the device when constructing same at room temperature, at the same temperature at which it is associated with the food product yet to be frozen, activating it while simultaneously freezing the repeatedly mentioned food product, which involves significant cost reduction, and all this, as will be seen below, being very difficult to handle when seeking to cancel the functions thereof.

To that end and more specifically, the device proposed by the invention comprises a small, transparent container body, preferably made of plastic, having therein a weak dividing partition determining two independent receptacles, one intended for being filled with pressurized water and the other with a colored liquid with a freezing point considerably lower than that of water, such as a dyed alcohol, for example.

The device thus formed will be introduced in the bag containing the food product, being completely visible, and both elements, i.e., the bag containing the product and the control device, freeze simultaneously. Upon reaching the envisaged freezing limit, the water will turn into ice with the corresponding volume increase that causes the dividing partition to break, said partition having been suitably weakened for that purpose, whereby there is an ice block in the device together with a certain amount of dyed liquid alcohol, the ice block being completely differentiated from the alcohol accompanying it.

In the event of any unwanted thawing of the food product, and accordingly of the control device, the ice in one of the compartments will melt and mix with the alcohol, the device adopting a homogenous color resulting from said mixing, which will indicate without any doubt that thawing and refreezing of the product to be controlled has occurred at least once.

### Description of the Drawings

To complement the description that is being made and for the purpose of aiding to better understand the features of the invention according to a preferred practical embodiment thereof, a set of drawings is attached as an integral part of said description, in which the following is depicted with an illustrative and non-limiting character:
Figure 1 shows a schematic plan depiction of a control device for controlling the freezing of food products.
Figure 2 shows a depiction similar to that of Figure 1, showing a formal embodiment variant for said device.
Figure 3 shows a profile in diametral section of any of the devices of Figures 1 and 2.
Figure 4 shows a view similar to that of Figure 3 after the control device has frozen.
Figure 5 in turn shows a depiction similar to that of Figures 3 and 4, the effect produced in the device if it thaws and how it would look after refreezing. Preferred Embodiment of the Invention

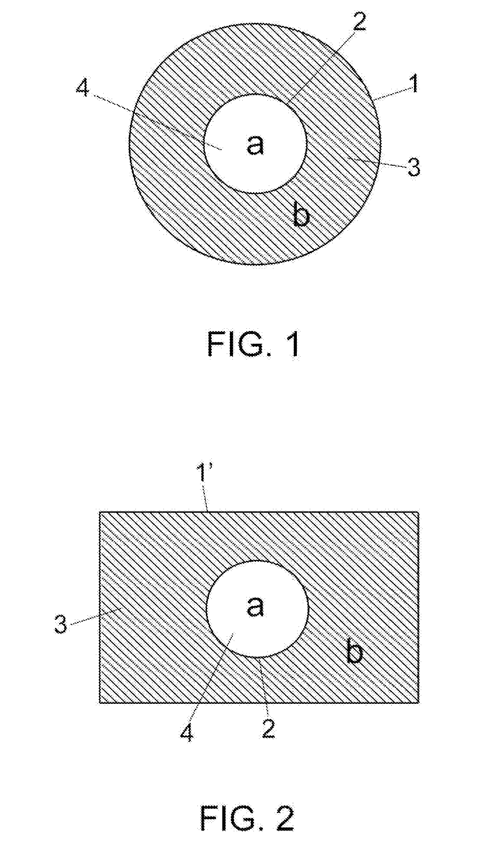

In view of the described drawings, it can be seen how the control device proposed by the invention is formed from a container (1, 1') which, adopts a cylindrical configuration in the practical embodiment of Figure 1, while in the case of Figure 2 it adopts a rectangular prismatic configuration, it being obvious that this configuration is merely illustrative, there being virtually countless configurations that may also be valid.

In any case, the container (1) has therein a dividing partition (2), which adopts a cylindrical configuration in both cases, but likewise it may also adopt any other configuration provided that it is capable of keeping two compartments (3, 4) completely independent from one another inside the container (1, 1').

Either one of these compartments, such as the compartment with reference number 4, for example, is intended for containing water, while the other compartment (3) is intended for containing a dyed liquid with a very low freezing point, such as a dyed alcohol, for example.

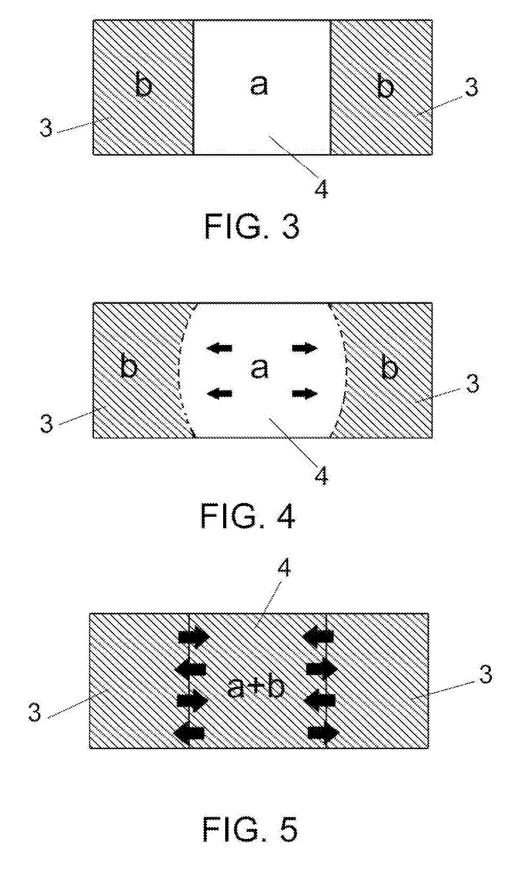

The device thus formed is subjected to the same freezing process as the food product to be controlled, such that the water contained in the compartment (4) freezes with the subsequent volume increase, as shown in Figure 4, that causes the weak dividing partition (2) to break, the alcohol remaining in liquid state.

Logically and given that the invention relates to a solid product and a liquid product, as long as the temperature of the device is freezing temperature, such elements will not mix together. However, when thawing occurs and the ice in the compartment (4) turns into water, the water and dyed alcohol mix together, as shown in Figure 5, such that both liquids have a homogenous color. Therefore, if the food product refreezes or freezes again, this would be indicated by the fact that the water and alcohol can no longer be separated from one another, and the color of the mixture remains homogeneous.

## Claims

1. A control device for controlling the freezing of food products, **characterized in that** it comprises a small, closed, transparent container, having therein a weak dividing partition determining two independent compartments, one of which is filled with water while the other is filled with a colored liquid with a freezing point considerably lower than that of water, such as a dyed alcohol, for example.

2. The control device for controlling the freezing of food products according to claim 1, **characterized in that** said dividing partition is weak enough so that it will break when the water freezes, both compartments being communicated with one another.

## Amended claims

### Amended claims under Art. 19.1 PCT

1. A control device for controlling the freezing of food products **characterized in that** it comprises a small, closed, transparent container which can adopt any configuration, having therein suitably fixed thereto a weak dividing partition determining two independent compartments, one of which is filled with pressurized water while the other is filled with a colored liquid with a freezing point considerably lower than that of water, such as a dyed alcohol, for example, the assembly being leak-tight.
